# EUROPÄISCHE PATENTSCHRIFT

(11) **EP 2 015 952 B1**
(45) Veröffentlichungstag und Bekanntmachung des Hinweises auf die Patenterteilung: **11.07.2012**
(21) Anmeldenummer: 07728127.7
(22) Anmeldetag: 16.04.2007
(51) Int. Cl.: B60K 7/00

(54) **ANTRIEB FÜR EIN FLURFÖRDERZEUG**
DRIVE UNIT FOR AN INDUSTRIAL TRUCK
ENTRAINEMENT POUR CHARIOT DE MANUTENTION

(30) Priorität: 10.05.2006 DE 102006021676
(43) Veröffentlichungstag der Anmeldung: 21.01.2009
(73) Patentinhaber: ZF Friedrichshafen AG, 88038 Friedrichshafen (DE)
(72) Erfinder: SCHARFENBERG, Stephan, 99869 Tüttleben (DE); STÜBNER, Frank, 99894 Ernstroda (DE); MENGE, Chris, 99869 Seebergen (DE)
(86) Internationale Anmeldenummer: PCT/EP2007/053662
(87) Internationale Veröffentlichungsnummer: WO 2007/128651

(56) Entgegenhaltungen:
- DE-A1-102004 001 701
- GB-A- 2 055 338
- JP-A- 60 078 831
- US-A- 4 995 679

## Beschreibung

Die Erfindung betrifft einen Antrieb für ein Flurförderzeug nach der im Oberbegriff von Anspruch 1 näher definierten Art.

Die DE 10 2004 001 701 A1 offenbart einen Antrieb für ein Flurförderzeug, bei weichem ein erstes Bauteil drehfest mit einem Elektromotor und zusätzlich drehfest mit einem nicht gezeigten Rahmen des Flurförderzeugs verbunden ist und dieses erste Bauteil eine erste Bohrung zur Aufnahme eines ersten Außenrings eines Kegelrollenlagers und eine zweite Bohrung zur Aufnahme eines Außenrings eines zweiten Kegelrollenlagers aufweist. Die Innenringe der Kegelrollenlager sind auf einem zylindrischen Abschnitt eines zweiten Bauteils angeordnet, welches flanschartig ausgebildet ist, und eine Au ßenverzahnung aufweist, über welche ein weiterer Elektromotor über ein Ritzel eintreiben kann. Das zweite Bauteil ist drehfest mit einem Getriebegehäuse verbunden, wodurch das Getriebegehäuse und das zweite Bauteil im ersten Bauteil im Sinne einer Lenkbewegung verdreht werden kann.

Der vorliegenden Erfindung liegt die Aufgabe zugrunde, einen Antrieb für ein Flurförderzeug zu schaffen, welcher sich durch eine einfache und kostengünstige Lagerung zum Verwirklichen der Lenkbewegung auszeichnet.

Die Aufgabe wird mit einem, auch die kennzeichnenden Merkmale des Hauptanspruchs aufweisenden Antrieb für ein Flurförderzeug gelöst.

Erfindungsgemäß weist der Antrieb ein erstes Bauteil, welches drehfest mit dem Rahmen des Flurförderzeugs verbindbar ist, auf. Dieses erste Bauteil ist mit einer durchgehenden zylindrischen Bohrung versehen, welche zusälzlich eine Nut aufweist. In dieser Nut ist ein Ring angeordnet, welcher beispielsweise als Sicherungsring ausgebildet sein kann. Die Lagerung besteht vorzugsweise aus einer Wälzlagerung, wie beispielsweise Kegelrollenlager, wobei die Außenringe axial am Ring, welcher in die Nut eingreift, anliegen. Die Innenringe werden mittelbar einerseits über eine flanschartige Erweiterung des zweiten Bauteils und andererseits über eine Gewindemutter, welche auf einem zylindrischen Gewindeabschnitt des zweiten Bauteils aufgeschraubt ist, in axialer Richtung gehalten. Durch Verdrehen der Gewindemutter kann die entsprechende Lagervorspannung eingestellt werden.

In einer weiteren Ausgestaltungsform ist zwischen dem Außenring und der flanschartigen Erweiterung des zweiten Bauteils ein federelastisches Bauteil eingeklemmt, welches so am Außenring anliegt, dass das Schmiermittel im Lager nicht austreten kann. Dieses federelastische Bauteil ist beim anderen Lager zwischen dem Innenring und der Gewindemutter oder einem Sicherungsblech, welches sich zwischen der Gewindemutter und dem Innenring befindet, angeklemmt.

Dadurch, dass im ersten Bauteil die Bohrung als durchgehende Bohrung ausgeführt sein kann und der axiale Anschlag für die Außenringe der Lager über einen in einer Nut befindlichen Ring verwirklicht wird, kann eine kostengünstige und einfach aufgebaute Lagerung sowie eine einfache Herstellung des ersten Bauteils erreicht werden.

Weitere Merkmale sind der Figuren-Beschreibung zu entnehmen.

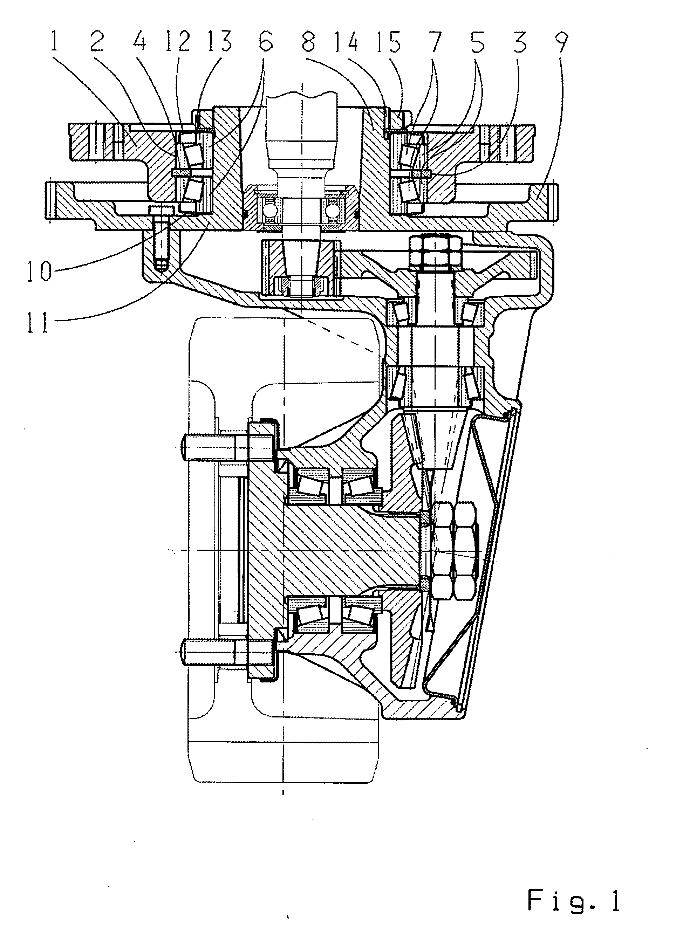

Die einzige Figur zeigt ein erstes Bauteil 1, welches beispielsweise mit einem Antriebsmotor und einem Rahmenteil eines Flurförderzeugs verbindbar und dadurch drehfest bzw. ortsfest gehalten ist, weist eine durchgehende Bohrung 2 auf, welche eine Nut 3 aufweist, in welcher sich ein Ring 4 befindet. Die Außenringe 5 sind in der Bohrung 2 angeordnet und liegen jeweils axial am Ring 4 an. Die Innenringe 6 der Lager 7 sind auf einem zylindrischen Abschnitt 8 des zweiten Bauteils 9 angeordnet. Ein federndes Bauteil 10 ist zwischen dem Innenring 6 und einer flanschartigen Erweiterung 11 des zweiten Bauteils 9 angeklemmt. Das federnde Bauteil 10 ist topfförmig ausgebildet, wodurch eine zylindrische Wand des Topfes axial am Außenring 5 anliegt, wodurch das Lager 7 abgedichtet wird. Ein federartiges Bauteil 12 ist zwischen einem Sicherungsblech 13 und dem Innenring 6 angeodnet, wodurch beide Lager 7 abgedichtet sind. Der zylindrische Abschnitt 8 weist einen Gewindeabschnitt 14 auf, auf welchem eine Gewindemutter 15 aufgeschraubt ist. Durch Verdrehen der Gewindemutter 15 wird die Vorspannung der Lager 7 eingestellt. Die Lagerung 7 wird dergestalt montiert, dass zuerst der Ring 4 in die Nut 3 eingelegt wird, anschließend die Außenringe 5 in die Bohrung 2 bis zur Anlage am Ring 4 eingeschoben werden, das federnde Bauteil 10 und der Innenring 6 auf den zylindrischen Abschnitt 8 bis zur Anlage an der flanschartigen Erweiterung 11 aufgeschoben werden. Das erste Bauteil 1 wird nun auf das zweite Bauteil 9 aufgeschoben und anschließend der zweite Innenring 6, das federnde Bauteil 12, das Sicherungsblech 13 und die Gewindemutter 15 montiert. Durch Verdrehen der Gewindemutter 15 wird der Innenring 6 weiter auf den zylindrischen Abschnitt 8 geschoben und anschließend die Vorspannung über die Gewindemutter 15 eingestellt. Der Gewindeabschnitt 14 ist dabei so lang, dass der Innenring 6 ausschließlich durch Verdrehen der Gewindemutter 15 auf den zylindrischen Abschnitt 8 geschoben wird. Dadurch wird eine sichere Montage gewährleistet, ohne die Lager 7 zu beschädigen. Indem die Bohrung 2 als durchgehende Bohrung ausgeführt ist, kann das erste Bauteil 1 einfach und kostengünstig hergestellt werden.

### Bezugszeichen

- 1: erstes Bauteil
- 2: Bohrung
- 3: Nut
- 4: Ring
- 5: Außenring
- 6: Innenring
- 7: Lager
- 8: zylindrischer Abschnitt
- 9: zweites Bauteil
- 10: federndes Bauteil
- 11: flanschartige Erweiterung
- 12: federndes Bauteil
- 13: Sicherungsblech
- 14: Gewindeabschnitt
- 15: Gewindemutter

## Patentansprüche

1. Antrieb für ein Flurförderzeug mit einem ersten Bauteil (1), welches drehfest mit einem Rahmenteil des Flurförderzeugs verbindbar ist, und einem zweiten Bauteil (9) mit einem zylindrischen Abschnitt, welcher konzentrisch zu einer Bohrung (2) des ersten Bauteils (1) angeordnet ist, wobei das zweite Bauteil (9) drehfest mit einem Getriebegehäuse verbindbar ist, welches Radkräfte von einem Fahrzeugrad aufnimmt, und zwischen dem zylindrischen Abschnitt (8) und der Bohrung (2) eine Lagerung (7) angeordnet ist, wodurch das zweite Bauteil (9) zum ersten Bauteil (1) im Sinne einer Lenkbewegung drehbar ist, wobei die Lagerung (7) aus einer Wälzlagerung besteht und Außenringe (5) und Innenringe (6) aufweist dardurch gekennzeichnet, dass die Innenringe mittelbar einerseits über eine flanschartige Erweiterung des zweiten Bauteils (9) und andererseits über eine Gewindemutter(15), welche auf einem zylindrischen Gewindeabschnitt (14) des zweiten Bauteils aufgeschraubt ist, in axialer Richtung gehalten werden, wobei die Bohrung (2) eine Nut (3) aufweist, in welche ein Ring (4) eingreift und beidseitig am Ring je ein Außenring (5) der Lagerung (7) anliegt.

2. Antrieb nach Anspruch 1, **dadurch gekennzeichnet, dass** die Lagerung aus zwei Kegelrollenlager besteht, welche in O-Anordnung angeordnet sind.

3. Antrieb nach Anspruch 1, **dadurch gekennzeichnet, dass** die Innenringe (6) der Lager (7) vorgespannt werden, indem ein Innenring (6) des Lagers (7) an einer flanschartigen Erweiterung (11) des zweiten Bauteils (9) anliegt, und der Innenring (6) des anderen Lagers (7) über eine Gewindemutter (14) axial verschiebbar ist, wobei der zylindrische Abschnitt (8) einen Gewindeabschnitt (14) aufweist, auf welchem die Gewindemutter (15) aufgeschraubt ist.

4. Antrieb nach Anspruch 3, **dadurch gekennzeichnet, dass** zwischen der Gewindemutter (15) und dem Innenring (6) ein Sicherungs-blech (13) angeordnet ist, welches ein Verdrehen der Gewindemutter (15) verhindert.

5. Antrieb nach Anspruch 3, **dadurch gekennzeichnet, dass** zur Abdichtung des Lagers (7) zwischen dem Innenring (6) und dem Außen-ring (5) je ein federelastisches Bauteil (10, 12) angeordnet ist, welches sich bis zum Außenring (5) erstreckt und an diesem so anliegt, dass Schmiermittel des Lagers (7) nicht austreten kann.

6. Antrieb nach Anspruch 5, **dadurch gekennzeichnet, dass** das federelastische Bauteil (10, 12) topfförmig ausgeführt ist.

7. Antrieb nach Anspruch 5, **dadurch gekennzeichnet, dass** das federelastische Bauteil (10, 12) aus Kunststoff hergestellt ist.

8. Antrieb nach Anspruch 5, **dadurch gekennzeichnet, dass** das federelastische Bauteil (10, 12) aus Federstahl hergestellt ist.

## Claims

1. Drive for an industrial truck having a first component (1), which can be connected fixedly in terms of rotation to a frame part of the industrial truck, and a second component (9) with a cylindrical section which is arranged concentrically with respect to a hole (2) of the first component (1), it being possible for the second component (9) to be connected fixedly in terms of rotation to a transmission housing which absorbs wheel forces from a vehicle wheel, and a bearing (7) being arranged between the cylindrical section (8) and the hole (2), as a result of which the second component (9) can be rotated with respect to the first component (1) in the sense of a steering movement, the bearing (7) consisting of an antifriction bearing and having outer rings (5) and inner rings (6), **characterized in that** the inner rings are held in the axial direction, indirectly firstly via a flange-like widened portion of the second component (9) and secondly via a threaded nut (15) which is screwed on a cylindrical threaded section (14) of the second component, the hole (2) having a groove (3), into which a ring (4) engages, and in each case one outer ring (5) of the bearing (7) bearing against the ring on both sides.

2. Drive according to Claim 1, **characterized in that** the bearing consists of two tapered roller bearings which are arranged in an O-arrangement.

3. Drive according to Claim 1, **characterized in that** the inner rings (6) of the bearings (7) are prestressed, by an inner ring (6) of the bearing (7) bearing against a flange-like widened portion (11) of the second component (9), and the inner ring (6) of the other bearing (7) can be displaced axially via a threaded nut (15), the cylindrical section (8) having a threaded section (14), on which the threaded nut (15) is screwed.

4. Drive according to Claim 3, **characterized in that** a securing plate (13) which prevents rotation of the threaded nut (15) is arranged between the threaded nut (15) and the inner ring (6).

5. Drive according to Claim 3, **characterized in that**, in order to seal the bearing (7), in each case one resilient component (10, 12) is arranged between the inner ring (6) and the outer ring (5), which resilient component (10, 12) extends as far as the outer ring (5) and bears against it in such a way that lubricant of the bearing (7) cannot escape.

6. Drive according to Claim 5, **characterized in that** the resilient component (10, 12) is of cup-shaped configuration.

7. Drive according to Claim 5, **characterized in that** the resilient component (10, 12) is produced from plastic.

8. Drive according to Claim 5, **characterized in that** the resilient component (10, 12) is produced from spring steel.

## Revendications

1. Entraînement pour un chariot de manutention comprenant un premier composant (1), qui peut être connecté de manière solidaire en rotation à une partie de châssis du chariot de manutention, et un deuxième composant (9) ayant une portion cylindrique, qui est disposé de manière concentrique à un alésage (2) du premier composant (1), le deuxième composant (9) pouvant être connecté de manière solidaire en rotation à un boîtier de transmission, qui reçoit des forces des roues d'une roue du véhicule, et un support sur palier (7) étant disposé entre la portion cylindrique (8) et l'alésage (2), de sorte que le deuxième composant (9) puisse tourner dans le sens d'un mouvement de direction par rapport au premier composant (1), le support sur palier (7) se composant d'un support sur palier à roulement et présentant des bagues extérieures (5) et des bagues intérieures (6), **caractérisé en ce que** les bagues intérieures sont maintenues dans la direction axiale de manière indirecte d'une part par le biais d'un élargissement de type bride du deuxième composant (9) et d'autre part par le biais d'un écrou fileté (15) qui est vissé sur une portion filetée cylindrique (14) du deuxième composant, l'alésage (2) présentant une rainure (3) dans laquelle s'engage une bague (4) et une bague extérieure respective (5) du support sur palier (7) s'appliquant de chaque côté sur la bague.

2. Entraînement selon la revendication 1, **caractérisé en ce que** le support sur palier se compose de deux paliers à rouleaux coniques, qui sont disposées dans un agencement en O.

3. Entraînement selon la revendication 1, **caractérisé en ce que** les bagues intérieures (6) des paliers (7) sont précontraintes, une bague intérieure (6) du palier (7) s'appliquant contre un élargissement de type bride (11) du deuxième composant (9), et la bague intérieure (6) de l'autre palier (7) pouvant être déplacée axialement par le biais d'un écrou fileté (15), la portion cylindrique (8) présentant une portion filetée (14) sur laquelle est vissé l'écrou fileté (15).

4. Entraînement selon la revendication 3, **caractérisé en ce qu'**une tôle de fixation (13) est disposée entre l'écrou fileté (15) et la bague intérieure (6), laquelle empêche une rotation de l'écrou fileté (15).

5. Entraînement selon la revendication 3, **caractérisé en ce que** pour étancher le palier (7) entre la bague intérieure (6) et la bague extérieure (5), un composant élastique à ressort (10, 12) est à chaque fois prévu, lequel s'étend jusqu'à la bague extérieure (5) et s'applique contre celle-ci de telle sorte que du lubrifiant du palier (7) ne puisse pas s'échapper.

6. Entraînement selon la revendication 5, **caractérisé en ce que** le composant élastique à ressort (10, 12) est réalisé en forme de pot.

7. Entraînement selon la revendication 5, **caractérisé en ce que** le composant élastique à ressort (10, 12) est fabriqué en plastique.

8. Entraînement selon la revendication 5, **caractérisé en ce que** le composant élastique à ressort (10, 12) est fabriqué en acier à ressort.
